# EUROPEAN PATENT APPLICATION

(11) **EP 4 712 033 A1**
(43) Date of publication of application: **18.03.2026**
(21) Application number: 25198099.1
(22) Date of filing: 26.08.2025
(51) Int. Cl.: G06T 15/20, G06T 17/00, G06V 10/00

(54) **GENERATION OF INFERENCE MODEL BY MACHINE LEARNING USING PILE IMAGES**

(30) Priority: 12.09.2024 JP 2024158066
(71) Applicant: Kabushiki Kaisha Yaskawa Denki, Kitakyushu-shi, Fukuoka 806-0004 (JP)
(72) Inventor: Masumura, Ryo, Kitakyushu-shi, Fukuoka, 806-0004 (JP); Kunichi, Daisuke, Kitakyushu-shi, Fukuoka, 806-0004 (JP); Kashiyama, Marino, Kitakyushu-shi, Fukuoka, 806-0004 (JP)
(74) Representative: Grünecker Patent- und Rechtsanwälte PartG mbB

(57) **Abstract**

A system includes: an image generation unit configured to generate a plurality of workpiece images each of which shows a workpiece viewed from a different viewpoint; an image synthesis unit configured to generate, based on the plurality of workpiece images, one or more virtual pile images showing a plurality of piled workpieces; and a training unit configured to generate, by machine learning using the one or more virtual pile images, an inference model configured to infer workpiece information regarding one or more of the workpieces shown in the pile image.

## Description

### TECHNICAL FIELD

One aspect of the present disclosure relates to a system, an inference model generation method, and an inference model generation program.

### BACKGROUND

Techniques are known for generating an inference model for inferring workpiece information regarding one or more workpieces from a captured image of piled workpieces. For example, Japanese Patent No. 6822929 discloses an information processing apparatus including: an imaging unit capable of capturing first distance images of an object from a plurality of angles; a generation unit that generates a three-dimensional model of the object based on the first distance images and generates extraction images showing specific parts of the object corresponding to the plurality of angles based on the three-dimensional model; a training unit that generates a first model capable of estimating the position of a specific part in any second distance image based on the extraction images corresponding to the plurality of angles and the first distance images corresponding to the plurality of angles, and generates a second model capable of detecting the object in the second distance image based on the plurality of first distance images; and an image recognition unit that applies the second model to a second distance image captured from a certain angle, and, when the object is detected, applies the first model to estimate the position of the specific part of the object.

### SUMMARY

### Technical Problem

There is a demand for more easily generating an inference model for performing inference on a workpiece.

### Solution to Problem

A system according to one aspect of the present disclosure includes: an image generation unit configured to generate a plurality of workpiece images each of which shows a workpiece viewed from a different viewpoint; an image synthesis unit configured to generate, based on the plurality of workpiece images, one or more virtual pile images showing a plurality of piled workpieces; and a training unit configured to generate, by machine learning using the one or more virtual pile images, an inference model configured to infer workpiece information regarding one or more of the workpieces shown in the pile image.

### Advantageous Effects

According to one aspect of the present disclosure, an inference model for performing inference on a workpiece may be generated more easily.

### BRIEF DESCRIPTION OF THE DRAWINGS

FIG. 1 is a diagram showing an example functional configuration of an inference model generation system.
FIG. 2 is a diagram showing an example hardware configuration of a computer used for the inference model generation system.
FIG. 3 is a flowchart showing an example operation of the inference model generation system in a training phase.
FIG. 4 is a diagram showing an example of attaching a ground truth label to a 3D model of a workpiece.
FIG. 5 is a diagram showing an example series of processes for generating a virtual pile image.
FIG. 6 is a diagram showing an example structure of an inference model.
FIG. 7 is a flowchart showing an example operation of the inference model generation system in an inference phase.

### DETAILED DESCRIPTION

In the following description, with reference to the drawings, the same reference numbers are assigned to the same components or to similar components having the same function, and overlapping description is omitted.

### Overview of system

A system according to the present disclosure is a computer system that generates an inference model, which is a computational model for inferring workpiece information regarding one or more workpieces from a captured image of piled workpieces (i.e., a real pile image). Therefore, the system may also be referred to as an inference model generation system, or the system may be said to include an inference model generation system. In some examples, the system generates one or more virtual pile images used for generating the inference model, and trains (generates) the inference model based on the one or more virtual pile images. The system may input a real pile image into the inference model to infer workpiece information regarding one or more real workpieces, and may execute a task on at least one of the real workpieces based on the workpiece information.

The "piled workpieces" refers to a set of a plurality of workpieces heaped in a manner that is not necessarily aligned. The "pile image" refers to an image showing a plurality of piled workpieces. The "virtual pile image" refers to an image which is generated by image processing by the system and shows piled workpieces that do not actually exist. The "real pile image" refers to an image acquired by capturing piled workpieces that actually exist.

The phrase of "training an inference model" and "generating an inference model" refer to generating the inference model by machine learning, which is a method of autonomously finding a law or rule by iteratively learning based on given information. The generation of the inference model corresponds to a training phase, and the use of the generated (trained) inference model corresponds to an inference phase (operation phase).

### System configuration

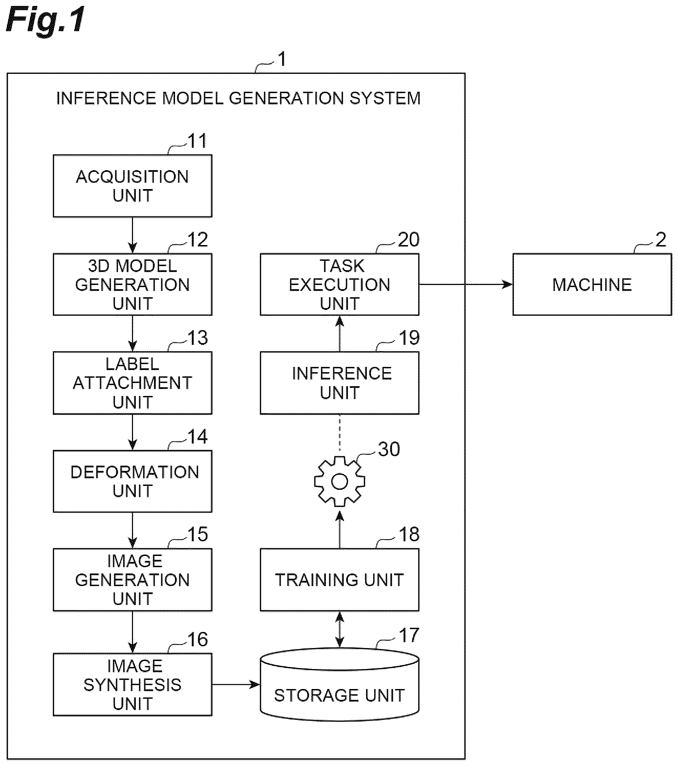

FIG. 1 is a diagram showing a functional configuration of an inference model generation system 1 according to some examples. In this example, the system 1 includes, as functional components, an acquisition unit 11, a 3D model generation unit 12, a label attachment unit 13, a deformation unit 14, an image generation unit 15, an image synthesis unit 16, a storage unit 17, a training unit 18, an inference unit 19, and a task execution unit 20. The system 1 is connected via a communication network to a machine 2 that is placed in a real working space and executes a task on a real workpiece. The machine 2 is, for example, a robot. The machine 2 may be a component of the system or may be provided outside the system.

The acquisition unit 11 is a functional element that acquires a plurality of captured images showing an actual workpiece (i.e., a real workpiece). The 3D model generation unit 12 is a functional module that generates a three-dimensional model (3D model) of the workpiece from the plurality of captured images of the workpiece. The label attachment unit 13 is a functional module that attaches a ground truth label indicating the ground truth of workpiece information regarding the workpiece to the 3D model of the workpiece. The deformation unit 14 is a functional module that deforms the 3D model of the workpiece. The image generation unit 15 is a functional module that generates a plurality of workpiece images each showing the workpiece viewed from a different viewpoint, based on the 3D model of the workpiece. Each workpiece image shows a virtual workpiece. The image synthesis unit 16 is a functional module that generates one or more virtual pile images based on the plurality of workpiece images. Each virtual pile image is associated with the ground truth labels of the respective plurality of workpieces. The storage unit 17 is a functional module that stores the generated virtual pile images. The training unit 18 is a functional module that trains (generates) an inference model 30 based on one or more of the virtual pile images. The inference unit 19 is a functional module that inputs a real pile image into the trained (generated) inference model 30 to infer workpiece information regarding one or more real workpieces. The task execution unit 20 is a functional module that executes a task on at least one of the one or more real workpieces based on the inferred workpiece information. For example, the task execution unit 20 causes the machine 2 to execute the task.

The system 1 may be implemented by any type of computer. The computer may be a general-purpose computer such as a personal computer or a business server, or may be incorporated in a dedicated device that executes specific processing.

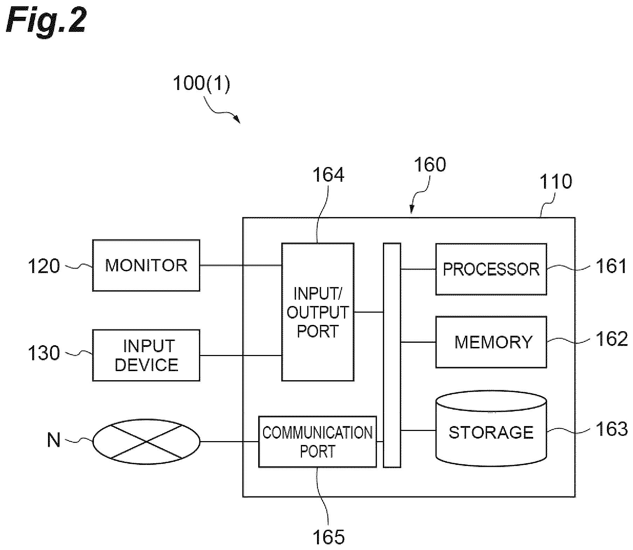

FIG. 2 is a diagram showing an example hardware configuration of a computer 100 used for the system 1. In this example, the computer 100 includes a main body 110, a monitor 120, and an input device 130.

The main body 110 is a device having circuitry 160. The circuitry 160 includes a processor 161, a memory 162, a storage 163, an input/output port 164, and a communication port 165. The number of each hardware component may be 1, or 2 or more. The storage 163 stores a program for configuring each functional module of the main body 110. The storage 163 is a computer-readable recording medium such as a hard disk, a nonvolatile semiconductor memory, a magnetic disk, or an optical disc. The memory 162 temporarily stores a program loaded from the storage 163, calculation results by the processor 161, and the like. The processor 161 configures each functional module by executing the program in cooperation with the memory 162. The input/output port 164 inputs and outputs electrical signals to and from the monitor 120 or the input device 130 in response to commands from the processor 161. The input/output port 164 may input and output electrical signals to and from other devices. The communication port 165 performs data communication with other devices via a communication network N in accordance with commands from the processor 161.

The monitor 120 is a device for outputting information from the main body 110. Examples of the monitor 120 include display devices such as various displays and speakers.

The input device 130 is a device for inputting information to the main body 110. Examples of the input device 130 include operation interfaces such as a keypad, a mouse, and a manipulation controller.

The monitor 120 and the input device 130 may be integrated as a touch panel. For example, the main body 110, the monitor 120, and the input device 130 may be integrated like a tablet computer.

Each functional module of the system 1 is implemented by loading an inference model generation program on the processor 161 or the memory 162 and execute the program in the processor 161. The inference model generation program includes code for implementing each functional module of the system 1. The processor 161 operates the input/output port 164 and the communication port 165 according to the inference model generation program, and executes reading and writing of data in the memory 162 or the storage 163.

The inference model generation program may be provided by being recorded in a non-transitory recording medium such as a CD-ROM, DVD-ROM, or semiconductor memory. Alternatively, the inference model generation program may be provided via a communication network as data signals superimposed on carrier waves.

### Operation of system

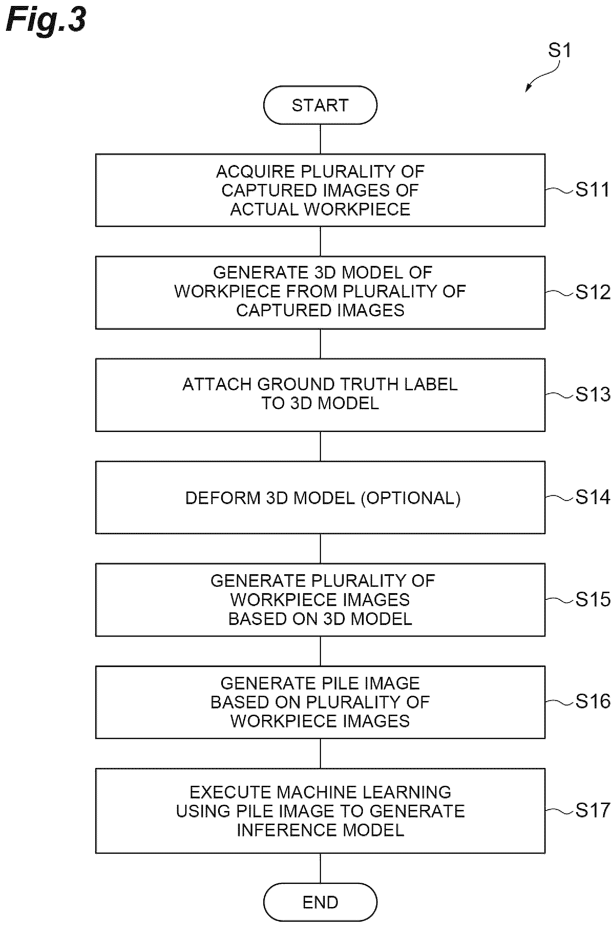

An example operation of the system 1 in the training phase as an example of the inference model generation method according to the present disclosure will be described with reference to FIG. 3. FIG. 3 shows an example of the operation as a processing flow S1. That is, the system 1 executes the processing flow S1.

In step S11, the acquisition unit 11 acquires a plurality of captured images obtained by capturing an actual workpiece (i.e., a real workpiece) from different viewpoints. All of the plurality of captured images show the same workpiece, but the directions for capturing the workpiece differ among the plurality of captured images. The acquisition unit 11 may directly receive each captured image from an imaging device such as a camera, may read each captured image from a predetermined storage device such as an image database, or may accept each captured image input by a user.

In step S12, the 3D model generation unit 12 generates a 3D model of the workpiece from the plurality of captured images of the workpiece. In some examples, the 3D model generation unit 12 estimates the viewpoint of the imaging device (i.e., the position and orientation of the imaging device) at the time of capturing the image, for each of the plurality of captured images of the workpiece. For example, the 3D model generation unit 12 executes the estimation process using a method called COLMAP. The 3D model generation unit 12 generates the 3D model of the workpiece by image synthesis using a neural radiance field (NeRF) based on the plurality of captured images of the workpiece. The NeRF represents a scene as a function that takes as input a two-dimensional vector representing a position and viewpoint direction in three-dimensional space and takes as output a radiated color and a density at that position. The NeRF estimates the light and transparency (θ, φ) at each position (x, y, z) in three-dimensional space using a neural network. In a case of using the NeRF, for each of a plurality of captured images, the 3D model generation unit 12 inputs the captured image into the neural network based on the viewpoint estimated from the captured image and estimates a five-dimensional space (x, y, z, θ, φ). Then, the 3D model generation unit 12 integrates the estimation results of the five-dimensional space to generate a 3D model composed of 3D meshes. The 3D model generation unit 12 may be implemented by a derivative technique such as Nerfacto, Instant-NGP, TensoRF, or Splatfacto.

In step S13, the label attachment unit 13 attaches a ground truth label of workpiece information regarding the workpiece to the 3D model of the workpiece. The ground truth label refers to information indicating the ground truth of the workpiece information.

The workpiece information may be various types of information regarding the workpiece. For example, the workpiece information may be information regarding the entire workpiece, such as segmentation, position, or orientation of the workpiece itself, a class indicating classification of the workpiece, or a skeleton of the workpiece. The skeleton of the workpiece refers to information that defines at least a part of the position, shape, or orientation of the workpiece. For example, the skeleton is represented by key points and connection relationships between the key points. The workpiece information regarding the workpiece itself is associated with the workpiece. Alternatively, the workpiece information may be information regarding a part of the workpiece, such as segmentation, position, or orientation of the part, or a part-class indicating classification of the part. The workpiece information regarding the part is associated with the part. Alternatively, the workpiece information may be a position set for the workpiece, such as a working position where a task is executed on the workpiece. The working position may be a picking position (e.g., gripping position), painting position, welding position, cutting position, machining position, or the like. Alternatively, the workpiece information may be information regarding a task performed on the workpiece.

A position set as workpiece information (e.g., position of the workpiece itself, position of a part of the workpiece, skeleton of the workpiece, and working position) is a relative position determined relative to the workpiece. This relative position is not an absolute position, but a position that is determined only when the workpiece is placed in three-dimensional space. A region set as workpiece information (e.g., a region occupied by the workpiece, and a part of the workpiece) is a relative region determined relative to the workpiece. This relative region is not an absolute region, but a region that is determined only when the workpiece is placed in three-dimensional space.

In some examples, the label attachment unit 13 provides a user interface for attaching a ground truth label to the 3D model. The label attachment unit 13 may provide a user interface for allowing the user to select one or more types of information items from a plurality of types of information items prepared in advance for the workpiece information. The plurality of types of information items is prepared in advance for at least two or more of the various types of workpiece information described above. The label attachment unit 13 selects one or more types of information items in response to a user operation. For example, the label attachment unit 13 selects, as the one or more types of information items, an information item regarding at least one of a relative position and a relative region determined relative to the workpiece. The label attachment unit 13 attaches a ground truth label of workpiece information corresponding to the selected one or more types of information items to the 3D model of the workpiece. As another example, the label attachment unit 13 attaches ground truth labels of workpiece information corresponding to a plurality of types of information items prepared in advance to the 3D model of the workpiece, and then selects one or more types of information items from the plurality of types of information items in response to a user operation. That is, the label attachment unit 13 may perform the process of attaching a ground truth label to the 3D model and the process of selecting information items in any order. In any case, the label attachment unit 13 may also serve as a selection unit for selecting one or more types of information items from a plurality of types of information items prepared in advance for workpiece information regarding the workpiece in response to a user operation.

The label attachment unit 13 may provide a user interface for inputting a ground truth label and attach the ground truth label input by the user to the 3D model. For example, the user inputs a ground truth label regarding at least one of the workpiece itself, the skeleton, one or more parts, and the working position, and the label attachment unit 13 attaches the ground truth label to the 3D model. In a case where the machine 2 is a robot, the label attachment unit 13 may provide a user interface for registering information (e.g., specifications of an end effector) regarding an end effector of the robot, such as a gripper or suction hand. In this case, the label attachment unit 13 may automatically set a ground truth label of a working position such as a picking position to the 3D model based on the information regarding the end effector, or may semi-automatically set the ground truth label to the 3D model based on a predetermined additional input from the user.

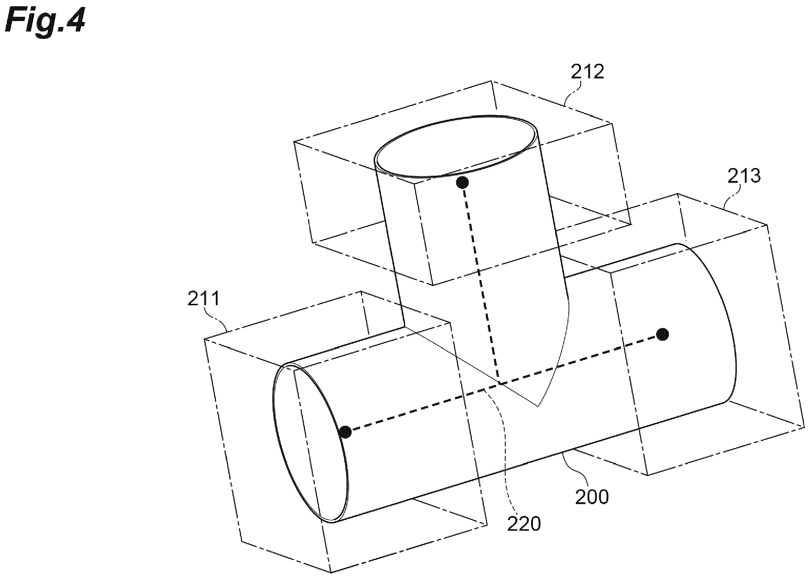

FIG. 4 is a diagram showing an example of attaching the ground truth label to the 3D model of a workpiece. The workpiece shown in this example is a T-shaped pipe. In this example, in response to a user operation, the label attachment unit 13 attaches, as the workpiece information, part definitions (part positions) 211 to 213 each corresponding to three parts of the workpiece and a skeleton 220 of the workpiece to a 3D model 200 of the workpiece.

Returning to FIG. 3, in step S14, the deformation unit 14 deforms the 3D model of the workpiece. For example, step S14 may be executed in a case where the workpiece is a flexible object. The step S14 may not be executed and the step S14 may be omitted, for example, in the case of a workpiece with high rigidity. The deformation unit 14 approximates the 3D model with a plurality of particles connected by elastic parameters to deform the 3D model. This deformation process may be implemented using Obi, an asset of the game development platform Unity (registered trademark), which is able to simulate the behavior of deformable objects. The deformation unit 14 may accept a 3D model deformed by a user operation or may automatically deform the 3D model. Of the one or more ground truth labels attached to the 3D model, ground truth labels affected by the deformation of the 3D model (e.g., ground truth labels regarding segmentation, information regarding parts, working positions, and the like) are changed to follow the deformation. The deformation unit 14 may generate two or more deformed 3D models based on the 3D model generated by the 3D model generation unit 12 (hereinafter also referred to as the "original 3D model"). The deformation unit 14 may provide the original 3D model and one or more deformed 3D models for subsequent processing.

In step S15, the image generation unit 15 generates a plurality of workpiece images each showing the workpiece viewed from a different viewpoint, based on the 3D model of the workpiece. Each workpiece image shows a virtual workpiece obtained by projecting the 3D model. In some examples, the image generation unit 15 generates one or more workpiece images each showing the workpiece viewed from a viewpoint different from all of the plurality of captured images acquired in step S11. The image generation unit 15 may generate a plurality of workpiece images from each of the original 3D model and the one or more deformed 3D models. The image generation unit 15 associates the ground truth label attached to the corresponding 3D model of the workpiece with each of the plurality of workpiece images. The image generation unit 15 may generate each workpiece image using various methods. In some examples, the image generation unit 15 generates the plurality of workpiece images while changing the viewpoint of a virtual camera with respect to the 3D model. Alternatively, the image generation unit 15 may render the 3D model to acquire a mask image, generate a pseudo image showing a scene including the workpiece by NeRF, and extract a workpiece in the pseudo image as a workpiece image using the mask image.

In step S16, the image synthesis unit 16 generates one or more virtual pile images showing a plurality of piled workpieces, based on the plurality of workpiece images each associated with a ground truth label. Typically, the image synthesis unit 16 generates a plurality of virtual pile images. In some examples, the image synthesis unit 16 reads a material image showing a place (such as a basket, box, or table) where a plurality of workpieces are to be piled, from a predetermined storage device. Then, the image synthesis unit 16 pastes the plurality of workpiece images onto the material image to generate the virtual pile image. As described above, each workpiece image is associated with a ground truth label of workpiece information regarding the corresponding workpiece. Therefore, the virtual pile image is associated with a plurality of ground truth labels corresponding to the plurality of pasted workpiece images. The image synthesis unit 16 may paste at least one of the plurality of workpiece images onto the material image multiple times. The image synthesis unit 16 may paste both a workpiece image generated based on the original 3D model and a workpiece image generated based on the deformed 3D model onto one material image to generate one single virtual pile image. The image synthesis unit 16 may paste, in addition to the plurality of workpiece images, one or more images of real workpieces onto the material image to generate a virtual pile image. The image synthesis unit 16 stores the generated one or more virtual pile images in the storage unit 17.

In step S17, the training unit 18 executes machine learning using the one or more virtual pile images to generate the inference model 30. That is, the training unit 18 generates the inference model 30 by the machine learning using the one or more virtual pile images. Typically, the training unit 18 trains (generates) the inference model 30 based on a plurality of virtual pile images.

The inference model 30 is constructed, for example, using a neural network. The inference model 30 may be configured using RTMDet, an object detection technique with high accuracy and short inference time. Alternatively, the inference model 30 may be configured using RTMDet and RTMPose, which estimates the posture of an object. The training unit 18 may configure the inference model 30 so as to present workpiece information of a workpiece whose recognition score obtained by object detection satisfies a predetermined criterion, and not to present workpiece information of a workpiece whose recognition score does not satisfy the criterion. That is, the training unit 18 may configure the inference model 30 so as to present workpiece information only for workpieces with relatively high detection confidence. In a case where the recognition score is set in the range from 0 to 1, the criterion for the recognition score is set to, for example, 0.8.

In some examples, the training unit 18 stores in advance a plurality of heads corresponding to a plurality of expected information items. The training unit 18 connects one or more heads corresponding to the one or more types of information items selected in step S13 to an output layer of a network constituting the inference model 30. The head refers to a part that performs higher-level processing such as classification or determination based on features extracted from input data by the network of the computational model. The head outputs an inference result corresponding to the information item. As described above, the label attachment unit 13 may select, as the one or more types of information items, an information item regarding at least one of a relative position and a relative region determined relative to the workpiece. In this case, the training unit 18 connects the head corresponding to the information item regarding at least one of the relative position and the relative region to the output layer. For example, in a case where the relative position is a working position where a task is executed on the workpiece, the training unit 18 connects, as a head corresponding to the information item regarding the relative position, a head configured to recognize the working position to the output layer. In a case where the relative position is a skeleton of the workpiece, the training unit 18 connects, as a head corresponding to the information item regarding the relative position, a head configured to recognize the skeleton to the output layer. In a case where the relative region is associated with one or more part-classes set for the workpiece, the training unit 18 connects, as a head corresponding to the information item regarding the relative region, a head configured to recognize the one or more part-classes to the output layer.

The training unit 18 trains (generates) the inference model 30 based on the one or more virtual pile images (for example, a plurality of virtual pile images) stored in the storage unit 17. As described above, the training unit 18 may train the inference model 30 including a network to which one or more heads are connected. In some examples, the training unit 18 executes the following processing for each virtual pile image. That is, the training unit 18 inputs the pile image into a predetermined machine learning model. The training unit 18 executes backpropagation based on an error between the output data estimated by the machine learning model and the ground truth label associated with the virtual pile image, and updates the parameters in the machine learning model. The training unit 18 repeats the processing for each virtual pile image until a predetermined termination condition is satisfied to generate the inference model 30. The termination condition may be to process all data records (pile images) of the training data. As another example, the termination condition may be to repeatedly process all data records (pile images) of the training data a predetermined number of times. Alternatively, the termination condition may be that a predetermined index (e.g., error between the ground truth label in evaluation data and the predicted value, accuracy rate, or the like) no longer improves, that is, the index converges. It should be noted that the inference model 30 is a computational model estimated to be optimal, and is not necessarily a "computational model that is actually optimal." The training unit 18 stores the trained inference model 30 in a predetermined storage device. The inference model 30, which is a trained model, is used by the inference unit 19.

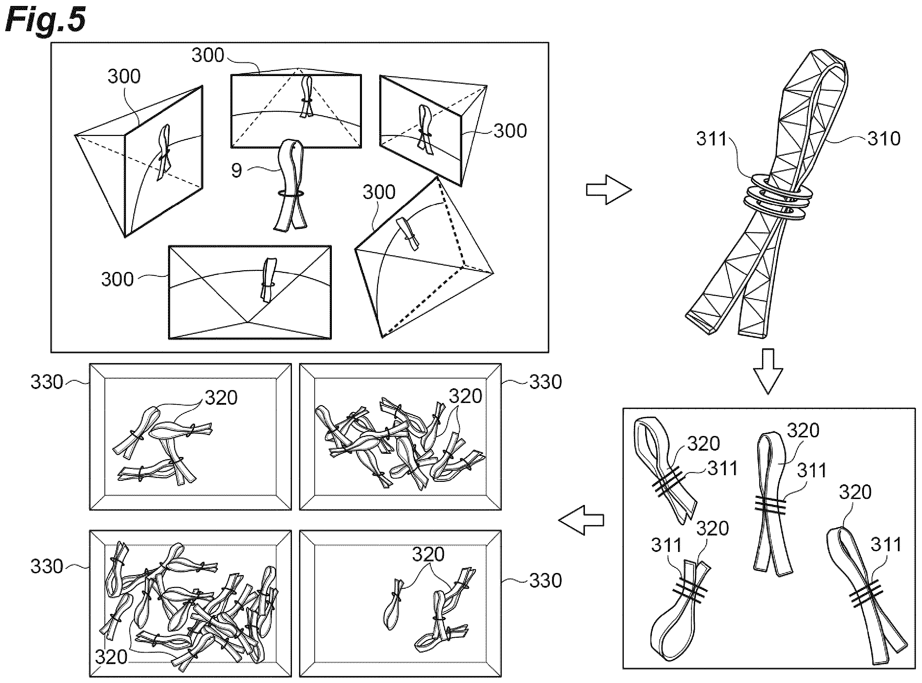

FIG. 5 is a diagram showing an example series of processes for generating a virtual pile image. In this example, the acquisition unit 11 acquires a plurality of captured images 300 obtained by capturing a workpiece 9 from different viewpoints (step S11). The 3D model generation unit 12 generates a 3D model 310 of the workpiece 9 from the plurality of captured images 300 (step S12). The label attachment unit 13 attaches a ground truth label 311 of workpiece information regarding the workpiece 9 to the 3D model 310 (step S13). In this example, the ground truth label 311 indicates the ground truth of a picking position. The deformation unit 14 may deform the 3D model 310 to newly generate another 3D model of the workpiece 9 (step S14). The image generation unit 15 generates a plurality of workpiece images 320 each showing the workpiece 9 viewed from a different viewpoint, based on the 3D model 310 (step S15). Each workpiece image 320 is associated with the ground truth label 311. The image synthesis unit 16 generates one or more virtual pile images 330 showing a plurality of piled workpieces 9, based on the plurality of workpiece images 320 each associated with the ground truth label 311 (step S16). The training unit 18 trains (generates) the inference model 30 based on those pile images 330 (step S17).

The processing flow S1 shown in FIG. 3 will be described again. The system 1 may execute the processing flow S1 for each of a plurality of classes of workpieces. The class refers to information indicating classification of a part or the whole of a workpiece. The plurality of classes of workpieces refers to a plurality of workpieces whose classification of a part or the whole of the workpiece is different from each other. For example, the plurality of classes of workpieces may be a plurality of workpieces of different types (e.g., a plurality of workpieces of different shapes). Alternatively, the plurality of classes of workpieces may be a plurality of workpieces of the same type but with different classes set. For example, in a case where a workpiece has a first part and a second part, the system 1 processes, as a plurality of classes of workpieces, a workpiece with a class set for the first part and a workpiece with a class set for the second part. As another example, the system 1 processes the front side and the back side of a workpiece as a plurality of classes of workpieces. Hereinafter, a process of generating one or more pile images based on a plurality of captured images for a plurality of classes of workpieces will be described.

In step S11, the acquisition unit 11 acquires, for each of the plurality of classes of workpieces, a plurality of captured images obtained by capturing the actual workpiece from different viewpoints.

In step S12, the 3D model generation unit 12 generates, for each of the plurality of classes of workpieces, a 3D model of the workpiece from the plurality of captured images of the workpiece.

In step S13, the label attachment unit 13 attaches, for each of the plurality of classes of workpieces, a ground truth label of workpiece information regarding the workpiece to the 3D model of the workpiece. For example, the label attachment unit 13 attaches, for each of the plurality of classes of workpieces, the ground truth label to the 3D model of the workpiece in response to a user operation.

In step S14, the deformation unit 14 may deform the 3D model for at least one of the plurality of classes of workpieces.

In step S15, the image generation unit 15 generates, for each of the plurality of classes of workpieces, a plurality of workpiece images each showing the workpiece viewed from a different viewpoint, based on the 3D model of the workpiece. The image generation unit 15 may generate a plurality of workpiece images from each of the original 3D model and one or more deformed 3D models for at least one of the plurality of classes of workpieces. The image generation unit 15 associates the ground truth label attached to the corresponding 3D model of the workpiece with each workpiece image. As described above, the image generation unit 15 may generate each workpiece image using various methods.

In step S16, the image synthesis unit 16 generates one or more virtual pile images (for example, a plurality of virtual pile images) showing a plurality of classes of piled workpieces, based on the plurality of workpiece images each associated with a ground truth label. The "virtual pile image showing a plurality of classes of workpieces" refers to a virtual pile image including one or more workpieces for each of the plurality of classes of workpieces.

In step S17, the training unit 18 executes machine learning using one or more virtual pile images (for example, a plurality of virtual pile images) to generate the inference model 30. This inference model 30 has a function of inferring workpiece information regarding each of two or more types (classes) of workpieces shown in one pile image. That is, the training unit 18 trains (generates) the inference model 30 based on one or more virtual pile images so as to infer the workpiece information for each of the plurality of classes of workpieces. In some examples, the training unit 18 connects, for each of the plurality of classes of workpieces, one or more heads corresponding to the workpiece and one or more types of information items selected in response to a user operation to an output layer of a network constituting the inference model 30. In addition, the training unit 18 configures the inference model 30 so as to output a class indicating the type of the workpiece from the output layer and to switch one or more heads for inferring the workpiece information according to the output class. Then, the training unit 18 trains (generates) the inference model 30 including a network to which one or more heads are connected for each of the plurality of classes of workpieces. In a case where there is no need to switch heads according to the class even though there are a plurality of classes of workpieces, the training unit 18 may connect one or more heads common to the plurality of classes to the output layer of the network constituting the inference model 30.

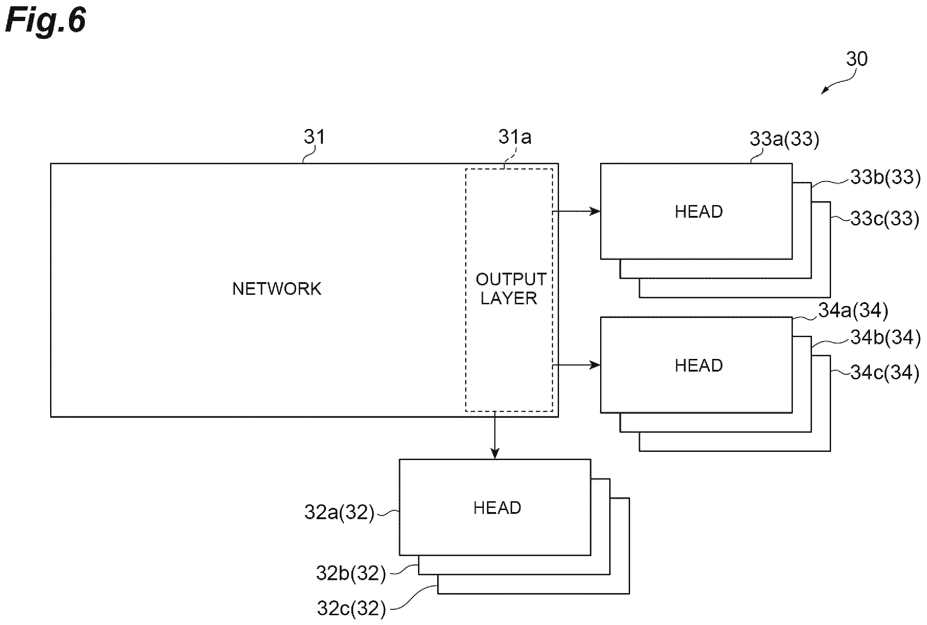

The inference model 30 including heads will be described with reference to FIG. 6. FIG. 6 is a diagram showing an example structure of the inference model 30. In this example, the inference model 30 is configured by connecting, to an output layer 31a of a network 31, three heads 32 to 34 corresponding to three types of information items selected in response to a user operation. The head 32 is connected to the output layer 31a so as to be parallel with the output layer 31a, and the heads 33 and 34 are connected downstream of the output layer 31a. For example, the head 32 infers segmentation of a part of the workpiece, the head 33 infers the skeleton of the workpiece, and the head 34 infers the picking position of the workpiece. Such an inference model 30 may be realized by implementing the network 31 and the head 32 with RTMDet, and the heads 33 and 34 with RTMPose.

In this example, for each of the three types of information items, three heads are provided corresponding to three classes of workpieces. If the three classes are distinguished as classes Cx, Cy, and Cz, the head 32a infers segmentation of a part of a workpiece of class Cx, the head 32b infers segmentation of a part of a workpiece of class Cy, and the head 32c infers segmentation of a part of a workpiece of class Cz. The head 33a infers the skeleton of a workpiece of class Cx, the head 33b infers the skeleton of a workpiece of class Cy, and the head 33c infers the skeleton of a workpiece of class Cz. The head 34a infers the picking position of a workpiece of class Cx, the head 34b infers the picking position of a workpiece of class Cy, and the head 34c infers the picking position of a workpiece of class Cz.

The output layer 31a outputs a class indicating the type of the workpiece. The inference model 30 infers the workpiece information using the heads 32a, 33a, and 34a in response to the output layer 31a outputting class Cx. In a case where the output layer 31a outputs class Cy, the inference model 30 infers the workpiece information using the heads 32b, 33b, and 34b. In a case where the output layer 31a outputs class Cz, the inference model 30 infers the workpiece information using the heads 32c, 33c, and 34c. In this way, the inference model 30 selects one from the three heads 32, one from the three heads 33, and one from the three heads 34, according to the class output from the output layer 31a. By switching the heads in this way, the inference model 30 is able to infer the workpiece information (segmentation of parts, skeleton, and picking position) for a plurality of classes of workpieces. In a case where the inference model 30 infers workpiece information regarding a single class of workpieces or there is no need to switch heads according to the class indicating the type of the workpiece, the number of heads 32, 33, and 34 is one each, and the heads are not switched.

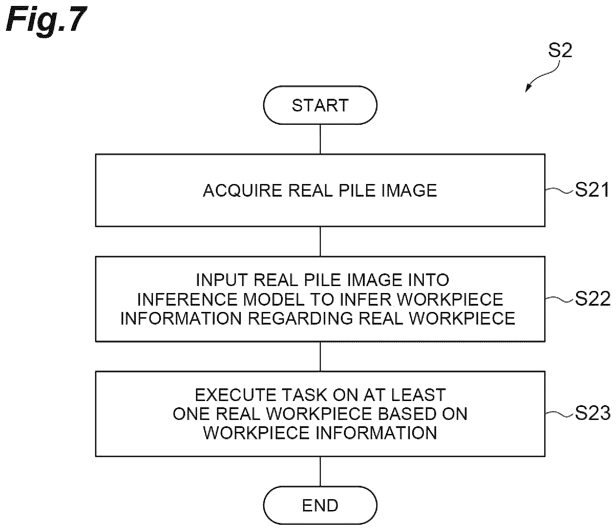

An example operation of the system 1 in the inference phase (operation phase) as an example of the inference model generation method according to the present disclosure will be described with reference to FIG. 7. FIG. 7 is a flowchart showing an example of the operation as a processing flow S2. That is, the system 1 executes the processing flow S2.

In step S21, the inference unit 19 acquires a real pile image showing a plurality of real workpieces. In some examples, the inference unit 19 receives a real pile image from an imaging device that has captured piled workpieces in a real working space.

In step S22, the inference unit 19 inputs the real pile image into the trained (generated) inference model 30 to infer the workpiece information regarding one or more real workpieces. The inference unit 19 may infer various types of information regarding the workpiece, such as segmentation, relative position, relative region, working position, class, part-class, etc., as workpiece information, in accordance with the settings in the training phase. As described above, in some examples, the inference unit 19 (inference model 30) presents the workpiece information of a workpiece whose recognition score obtained by object detection satisfies a predetermined criterion, and does not present the workpiece information of a workpiece whose recognition score does not satisfy the criterion.

In step S23, the task execution unit 20 executes, based on the inferred workpiece information, a predetermined task on at least one of the one or more real workpieces shown in the real pile image. For example, the task execution unit 20 causes the machine 2, such as a robot, to execute the task. Examples of the tasks include picking, painting, welding, cutting, and machining. In a case where the machine 2 is a robot, the task execution unit 20 may generate a path of the robot for executing the task and cause the robot to execute the task based on the path.

### Modifications

It is to be understood that not all aspects, advantages and features described herein may necessarily be achieved by, or included in, any one particular example. Indeed, having described and illustrated various examples herein, it should be apparent that other examples may be modified in arrangement and detail.

The system may use a 3D model prepared in advance instead of generating a 3D model of the workpiece from a plurality of captured images of the workpiece. Therefore, the system may not include functional modules corresponding to the acquisition unit 11 and the 3D model generation unit 12. As another example, the system may not deform the 3D model, and therefore may not include a functional module corresponding to the deformation unit 14.

The system may generate a plurality of workpiece images each showing a workpiece viewed from a different viewpoint by predetermined image processing without using the 3D model of the workpiece. Therefore, the system may not include functional modules corresponding to the acquisition unit 11, the 3D model generation unit 12, and the deformation unit 14.

The trained (generated) inference model may be ported to another computer system. Therefore, another computer system may execute the inference phase (operation phase). That is, the system may not include functional modules corresponding to the inference unit 19 and the task execution unit 20.

In the above system 1, the ground truth label is attached to the 3D model of the workpiece, and the ground truth label is associated with each workpiece image. As another example, the label attachment unit may directly attach the ground truth label to each workpiece image. Alternatively, another computer system may directly attach the ground truth label to each workpiece image, and in this case, the system may not include a functional module corresponding to the label attachment unit 13.

The system may train (generate) the inference model based on one or more workpiece images (for example, one or more workpiece images each showing the workpiece viewed from a viewpoint different from all of the plurality of captured images of the workpiece) generated based on the 3D model of the workpiece, without generating a virtual pile image. This inference model is a computational model for inferring the workpiece information regarding the workpiece from an image including the workpiece. In this example, the system may not include a functional module corresponding to the image synthesis unit 16.

The image used for training (generating) the inference model may be any image including the workpiece, and may be an image different from the above-described workpiece image and virtual pile image. In such a modification, the system may include at least a label attachment unit and a training unit. The label attachment unit selects one or more types of information items from a plurality of types of information items prepared in advance for workpiece information regarding the workpiece, in response to a user operation. The label attachment unit may attach a ground truth label of workpiece information corresponding to the plurality of types of information items or a ground truth label of workpiece information corresponding to the selected one or more types of information items to the 3D model of the workpiece. The training unit connects one or more heads corresponding to the selected one or more types of information items to an output layer of a network constituting the inference model configured to infer workpiece information regarding the workpiece from an image including the workpiece. Then, the training unit trains (generates) the inference model including the network to which the one or more heads are connected, using at least the ground truth label of workpiece information attached to the 3D model of the workpiece and corresponding to the selected information item. For example, the training unit trains (generates) the inference model using one or more images showing the workpiece corresponding to the 3D model and associated with the ground truth label. In this example, the image generation unit may generate, based on the 3D model, one or more workpiece images (for example, a plurality of workpiece images each showing the workpiece viewed from a different viewpoint) for training the inference model. That is, the training unit may train (generate) the inference model using the ground truth label of workpiece information attached to the 3D model of the workpiece and corresponding to the selected information item, as well as one or more workpiece images showing the workpiece.

The hardware configuration of the system is not limited to an aspect in which each functional module is realized by executing a program. For example, at least part of the above-described functional modules may be configured by a logic circuit specialized for the function, or may be configured by an application specific integrated circuit (ASIC) in which the logic circuit is integrated.

The processing procedure of the method executed by at least one processor is not limited to the above example. For example, some of the steps or processes described above may be omitted, or the steps may be executed in a different order. In addition, any two or more of the above-described steps may be combined, or some of the steps may be modified or deleted. Alternatively, other steps may be executed in addition to the above-described steps.

In a case where a magnitude relationship between two numerical values is compared in a computer system or a computer, either of two criteria of "equal to or greater than" and "greater than" may be used, and either of two criteria of "equal to or less than" and "less than" may be used.

### Appendix

We claim all modifications and variations coming within the spirit and scope of the subject matter claimed herein.

Regarding the above examples, the following appendices are provided by way of further illustration.

### (appendix 1)

A system comprising:
an image generation unit configured to generate a plurality of workpiece images each of which shows a workpiece viewed from a different viewpoint;
an image synthesis unit configured to generate, based on the plurality of workpiece images, one or more virtual pile images showing a plurality of piled workpieces; and
a training unit configured to train, based on the one or more virtual pile images, an inference model configured to infer workpiece information regarding one or more of the workpieces shown in the pile image from the pile image.
According to appendix 1, a pile image is generated using a plurality of workpiece images each showing a workpiece viewed from various viewpoints, and the inference model is trained (generated) using the pile image. This method may shorten the time required to generate the pile image, and therefore, the training (generation) of the inference model using the pile image may be easily performed. That is, an inference model for performing inference on piled workpieces may be generated more easily. In addition, since a pile image showing a situation in which a plurality of workpieces with various appearance shapes are piled, i.e., a pile image showing a situation similar to an actual scene, is acquired, it is expected that a highly accurate inference model may be generated by training using this pile image.

### (appendix 2)

The system according to appendix 1,
wherein the image generation unit is configured to generate the plurality of workpiece images for each of a plurality of classes of workpieces,
wherein the image synthesis unit is configured to generate the one or more virtual pile images showing the plurality of classes of workpieces that are piled, and
wherein the training unit is configured to train, based on the one or more virtual pile images, the inference model so as to infer the workpiece information for each of the plurality of classes of workpieces. According to appendix 2, since a pile image showing a plurality of classes (e.g., multi-class) of workpieces is generated, an inference model may be generated that is capable of inferring the workpiece information even in a situation where workpieces of different classes are piled.

### (appendix 3)

The system according to appendix 1 or 2, wherein the image generation unit is configured to generate the plurality of workpiece images based on a 3D model of the workpiece.
According to appendix 3, by using a 3D model of the workpiece, a plurality of workpiece images each showing the workpiece viewed from a different viewpoint may be generated more easily.

### (appendix 4)

The system according to appendix 3, further comprising:
an acquisition unit configured to acquire a plurality of captured images obtained by capturing the actual workpiece from different viewpoints; and
a 3D model generation unit configured to generate the 3D model of the workpiece from the plurality of captured images of the workpiece. According to appendix 4, since a 3D model of the workpiece is generated based on a plurality of captured images showing the actual workpiece, a 3D model similar to the actual workpiece may be acquired. By using this 3D model, a plurality of workpiece images more similar to the actual workpiece may be acquired, and therefore, a pile image more similar to an actual scene may be generated. For example, in a case of using a technique such as CycleGAN to convert simulation images into realistic images (Sim2Real), it is necessary to train the model using many training images to acquire realistic images, which requires a long training time. In addition, the training may be unstable, so highly accurate images may not necessarily be acquired in the end. In contrast, according to appendix 4, highly accurate pile images may be generated more stably and in a shorter time. Since highly accurate pile images are used for training, an inference model capable of inferring workpiece information with high accuracy may be generated in a shorter time.

### (appendix 5)

The system according to appendix 4, wherein the 3D model generation unit is configured to generate the 3D model of the workpiece by image synthesis using a neural radiance field based on the plurality of captured images of the workpiece.
According to appendix 5, since a neural radiance field is used for generating the 3D model from the plurality of captured images, highly accurate workpiece images similar to the actual workpiece may be acquired. By using the workpiece images, highly accurate pile images may be generated.

### (appendix 6)

The system according to any one of appendices 3 to 5, further comprising a deformation unit configured to approximate the 3D model of the workpiece with a plurality of particles connected by elastic parameters to deform the 3D model,
wherein the image generation unit is configured to generate the plurality of workpiece images based on the deformed 3D model. According to appendix 6, since a plurality of workpiece images are generated based on the deformed 3D model, 3D models of various appearance shapes may be generated easily and a plurality of workpiece images showing various appearance shapes may be acquired. By using these workpiece images, a pile image more similar to an actual scene may be generated, and a highly accurate inference model may be generated by training using the pile image. For example, an inference model may be generated that is capable of inferring, with high accuracy, the workpiece information of flexible or amorphous workpieces whose appearance shape easily changes.

### (appendix 7)

The system according to any one of appendices 3 to 6, further comprising a label attachment unit configured to attach a ground truth label of the workpiece information of the workpiece to the 3D model of the workpiece,
wherein the image generation unit is configured to associate the ground truth label attached to the 3D model of the workpiece with each of the plurality of workpiece images of the workpiece,
wherein the image synthesis unit is configured to generate the one or more virtual pile images based on the plurality of workpiece images with which the ground truth label is associated, and
wherein the training unit is configured to train the inference model based on the one or more virtual pile images with which a plurality of the ground truth labels are associated.
According to appendix 7, the ground truth label is attached to the 3D model, and the ground truth label is associated with the workpiece image. Since it is not necessary to attach the ground truth label to each workpiece image, the time required for labeling may be shortened. As a result, the time required to generate pile images used for training the inference model may be shortened. In some examples, since the ground truth label is attached to the 3D model following the deformation of the 3D model, the time required for labeling 3D models of various appearance shapes may also be shortened.

### (appendix 8)

The system according to appendix 7,
wherein the label attachment unit is configured to select, in response to a user operation, one or more types of information items from a plurality of types of information items prepared in advance for the workpiece information, and
wherein the training unit is configured to:
   connect one or more heads corresponding to the selected one or more types of information items to an output layer of a network constituting the inference model; and
   train the inference model including the network to which the one or more heads are connected.
According to appendix 8, in correspondence with the information item selected in response to a user operation, the ground truth label is attached to the 3D model and the head of the inference model is set. With this mechanism, an inference model for inferring the workpiece information in accordance with the user's request may be generated easily.

### (appendix 9)

The system according to appendix 8,
wherein the label attachment unit is configured to select, as the one or more types of information items, an information item regarding at least one of a relative position and a relative region that are determined relative to the workpiece, and
wherein the training unit is configured to connect the head corresponding to the information item regarding at least one of the relative position and the relative region to the output layer.
According to appendix 9, an inference model for inferring a position or region determined relative to the workpiece may be generated easily.

### (appendix 10)

The system according to appendix 9,
wherein the relative position is a working position where a task is executed on the workpiece, and
wherein the head corresponding to the information item regarding the relative position is a head configured to recognize the working position.
According to appendix 10, an inference model for inferring a working position, which is often used for processing piled workpieces, may be generated easily.

### (appendix 11)

The system according to appendix 9,
wherein the relative position is a skeleton of the workpiece, and
wherein the head corresponding to the information item regarding the relative position is a head configured to recognize the skeleton.
According to appendix 11, an inference model for inferring the skeleton of a workpiece, which is often used for processing piled workpieces, may be generated easily.

### (appendix 12)

The system according to appendix 9,
wherein the relative region is associated with one or more part-classes set for the workpiece, and
wherein the head corresponding to the information item regarding the relative region is a head configured to recognize the one or more part-classes.
According to appendix 12, an inference model for inferring part-classes, which are often used for processing piled workpieces, may be generated easily.

### (appendix 13)

The system according to any one of appendices 8 to 12, wherein the training unit is configured to:
for each of a plurality of classes of workpieces, connect the one or more heads corresponding to the workpiece and the selected one or more types of information items to the output layer, and
configure the inference model so as to output a class indicating a type of the workpiece from the output layer, and to switch the one or more heads for inferring the workpiece information according to the output class.
According to appendix 13, the inference model is configured so as to be able to infer the workpiece information for a plurality of classes (e.g., multi-class) of workpieces. Therefore, the workpiece information for each workpiece may be inferred even in a situation where the workpieces of different classes are piled. For example, the workpiece information for each workpiece may be inferred even in a situation where a plurality of classes of workpieces with different basic skeleton structures are mixed.

### (appendix 14)

The system according to any one of appendices 1 to 13, wherein the training unit is configured to configure the inference model so as not to present the workpiece information of a workpiece whose recognition score obtained by object detection does not satisfy a predetermined criterion.
According to appendix 14, since the workpiece information regarding a workpiece whose recognition score does not satisfy the criterion is not presented, the workpiece information only for workpieces with relatively high recognition confidence may be presented. For example, the workpiece information may be presented only for workpieces that are expected to be reliably processed.

### (appendix 15)

The system according to any one of appendices 1 to 14, further comprising:
an inference unit configured to input a real pile image showing a plurality of real workpieces into the generated inference model to infer the workpiece information regarding one or more of the real workpieces; and
a task execution unit configured to execute a task on at least one of the one or more real workpieces based on the inferred workpiece information.
According to appendix 15, the inference model may be caused to process a real pile image and a task on at least one workpiece shown in the pile image may be executed.

### (appendix 16)

A system comprising:
an acquisition unit configured to acquire a plurality of captured images being acquired by capturing an actual workpiece from different viewpoints;
a 3D model generation unit configured to generate a 3D model of the workpiece by image synthesis using a neural radiance field based on the plurality of captured images of the workpiece;
an image generation unit configured to generate one or more workpiece images each showing the workpiece viewed from a viewpoint different from all of the plurality of captured images of the workpiece, based on the 3D model of the workpiece; and
a training unit configured to train, based on the one or more workpiece images, an inference model configured to infer workpiece information regarding the workpiece from an image including the workpiece.
According to appendix 16, the 3D model of the workpiece is generated based on the plurality of captured images showing the actual workpiece using a neural radiance field, and the workpiece image are generated using the 3D model. By such a series of processes, highly accurate workpiece images similar to the actual workpiece may be acquired. For example, in a case of using a technique such as CycleGAN to convert simulation images into realistic images (Sim2Real), it is necessary to train a model using many training images to acquire realistic images, which requires a long training time. In addition, the training may be unstable, so highly accurate images may not necessarily be acquired in the end. In contrast, according to appendix 16, highly accurate workpiece images may be generated more stably and in a shorter time. By using highly accurate workpiece images for training, an inference model capable of inferring the workpiece information with high accuracy may be generated easily.

### (appendix 17)

A system comprising:
a selection unit configured to select, in response to a user operation, one or more types of information items from a plurality of types of information items prepared in advance for workpiece information regarding a workpiece; and
a training unit configured to connect one or more heads corresponding to the selected one or more types of information items to an output layer of a network constituting an inference model configured to infer the workpiece information regarding the workpiece from an image including the workpiece, and to train the inference model including the network to which the one or more heads are connected, using at least a ground truth label of workpiece information that is attached to the 3D model of the workpiece and corresponds to the selected information item.
According to appendix 17, the head of the inference model is set in correspondence with the information item selected in response to the user operation. Then, the inference model is trained (generated) using at least the ground truth label of the workpiece information corresponding to the information item. With this mechanism, an inference model for inferring the workpiece information according to the user's request may be generated easily.

### (appendix 18)

The system according to appendix 16, further comprising an image generation unit configured to generate one or more workpiece images showing the workpiece, based on the 3D model of the workpiece,
wherein the training unit is configured to train the inference model further using the one or more workpiece images.
According to appendix 18, since the workpiece image are generated from the 3D model of the workpiece, workpiece images used for training (generating) the inference model may be generated easily.

### (appendix 19)

An inference model generation method executed by a system comprising at least one processor, the method comprising:
generating a plurality of workpiece images each of which shows a workpiece viewed from a different viewpoint;
generating, based on the plurality of workpiece images, one or more virtual pile images showing a plurality of piled workpieces; and
training, based on the one or more virtual pile images, an inference model configured to infer workpiece information regarding one or more of the workpieces shown in the pile image from the pile image.
According to appendix 19, a pile image is generated using a plurality of workpiece images each showing a workpiece viewed from various viewpoints, and the inference model is trained (generated) using the pile image. This method may shorten the time required to generate the pile image, and therefore, the training (generation) of the inference model using the pile image may be easily performed. That is, an inference model for performing inference on piled workpieces may be generated more easily. In addition, since a pile image showing a situation in which a plurality of workpieces with various appearance shapes are piled, i.e., a pile image showing a situation similar to an actual scene, is acquired, it is expected that a highly accurate inference model may be generated by training using this pile image.

### (appendix 20)

An inference model generation program for causing a computer to execute:
generating a plurality of workpiece images each of which shows a workpiece viewed from a different viewpoint;
generating, based on the plurality of workpiece images, one or more virtual pile images showing a plurality of piled workpieces; and
training, based on the one or more virtual pile images, an inference model configured to infer workpiece information regarding one or more of the workpieces shown in the pile image from the pile image.
According to appendix 20, a pile image is generated using a plurality of workpiece images each showing a workpiece viewed from various viewpoints, and the inference model is trained (generated) using the pile image. This method may shorten the time required to generate the pile image, and therefore, the training (generation) of the inference model using the pile image may be easily performed. That is, an inference model for performing inference on piled workpieces may be generated more easily. In addition, since a pile image showing a situation in which a plurality of workpieces with various appearance shapes are piled, i.e., a pile image showing a situation similar to an actual scene, is acquired, it is expected that a highly accurate inference model may be generated by training using this pile image.

## Claims

1. A system (1) comprising:
an image generation unit (15) configured to generate a plurality of workpiece images (320) each of which shows a workpiece viewed from a different viewpoint;
an image synthesis unit (16) configured to generate, based on the plurality of workpiece images (320), one or more virtual pile images (330) showing a plurality of piled workpieces; and
a training unit (18) configured to generate, by machine learning using the one or more virtual pile images (330), an inference model (30) configured to infer workpiece information regarding one or more of the workpieces shown in the pile image.

2. The system (1) according to claim 1,
wherein the image generation unit (15) is configured to generate the plurality of workpiece images (320) for each of a plurality of classes of workpieces,
wherein the image synthesis unit (16) is configured to generate the one or more virtual pile images (330) showing the plurality of classes of workpieces that are piled, and
wherein the training unit (18) is configured to generate, based on the one or more virtual pile images (330), the inference model (30) so as to infer the workpiece information for each of the plurality of classes of workpieces.

3. The system (1) according to claim 1, wherein the image generation unit (15) is configured to generate the plurality of workpiece images (320) based on a 3D model (310) of the workpiece.

4. The system (1) according to claim 3, further comprising:
an acquisition unit (11) configured to acquire a plurality of captured images (300) obtained by capturing an actual workpiece from different viewpoints; and
a 3D model generation unit (12) configured to generate the 3D model (310) of the workpiece from the plurality of captured images (300) of the workpiece.

5. The system (1) according to claim 4, wherein the 3D model generation unit (12) is configured to generate the 3D model (310) of the workpiece by image synthesis using a neural radiance field based on the plurality of captured images (300) of the workpiece.

6. The system (1) according to claim 3, further comprising a deformation unit (14) configured to approximate the 3D model (310) of the workpiece with a plurality of particles connected by elastic parameters to deform the 3D model (310),
wherein the image generation unit (15) is configured to generate the plurality of workpiece images (320) based on the deformed 3D model.

7. The system (1) according to any one of claims 3 to 6, further comprising a label attachment unit (13) configured to attach a ground truth label of the workpiece information of the workpiece to the 3D model (310) of the workpiece,
wherein the image generation unit (15) is configured to associate the ground truth label attached to the 3D model (310) of the workpiece with each of the plurality of workpiece images (320) of the workpiece,
wherein the image synthesis unit (16) is configured to generate the one or more virtual pile images (330) based on the plurality of workpiece images (320) with which the ground truth label is associated, and
wherein the training unit (18) is configured to generate the inference model (30) by the machine learning using the one or more virtual pile images (330) with which a plurality of the ground truth labels are associated.

8. The system (1) according to claim 7,
wherein the label attachment unit (13) is configured to select, in response to a user operation, one or more types of information items from a plurality of types of information items prepared in advance for the workpiece information, and
wherein the training unit (18) is configured to:
connect one or more heads (32-34) corresponding to the selected one or more types of information items to an output layer (31a) of a network (31) constituting the inference model (30); and
generate the inference model (30) including the network (31) to which the one or more heads (32-34) are connected.

9. The system (1) according to claim 8,
wherein the label attachment unit (13) is configured to select, as the one or more types of information items, an information item regarding at least one of a relative position and a relative region that are determined relative to the workpiece, and
wherein the training unit (18) is configured to connect the head (32-34) corresponding to the information item regarding at least one of the relative position and the relative region to the output layer (31a).

10. The system (1) according to claim 9,
wherein the relative position is a working position where a task is executed on the workpiece, and
wherein the head (32-34) corresponding to the information item regarding the relative position is a head configured to recognize the working position.

11. The system (1) according to claim 9,
wherein the relative position is a skeleton of the workpiece, and
wherein the head (32-34) corresponding to the information item regarding the relative position is a head configured to recognize the skeleton.

12. The system (1) according to claim 9,
wherein the relative region is associated with one or more part-classes set for the workpiece, and
wherein the head (32-34) corresponding to the information item regarding the relative region is a head configured to recognize the one or more part-classes.

13. The system (1) according to any one of claims 1 to 6, further comprising:
an inference unit (19) configured to input a real pile image showing a plurality of real workpieces into the generated inference model (30) to infer the workpiece information regarding one or more of the real workpieces; and
a task execution unit (20) configured to execute a task on at least one of the one or more real workpieces based on the inferred workpiece information.

14. An inference model generation method executable by a system (1) comprising at least one processor (161), the method comprising:
generating (S15) a plurality of workpiece images (320) each of which shows a workpiece viewed from a different viewpoint;
generating (S16), based on the plurality of workpiece images (320), one or more virtual pile images (330) showing a plurality of piled workpieces; and
generating (S17), by machine learning using the one or more virtual pile images (330), an inference model (30) configured to infer workpiece information regarding one or more of the workpieces shown in the pile image.

15. An inference model generation program comprising instructions which, when the program is executed by a computer (100), cause the computer (100) to carry out:
generating (S15) a plurality of workpiece images (320) each of which shows a workpiece viewed from a different viewpoint;
generating (S16), based on the plurality of workpiece images (320), one or more virtual pile images (330) showing a plurality of piled workpieces; and
generating (S17), by machine learning using the one or more virtual pile images (330), an inference model (30) configured to infer workpiece information regarding one or more of the workpieces shown in the pile image.
